(19) Europäisches Patentamt
European Patent Office
Office européen des brevets

(11) Publication number: 0 300 484
A2

# (12) EUROPEAN PATENT APPLICATION

(21) Application number: **88111790.7**

(22) Date of filing: **21.07.88**

(51) Int. Cl.⁴: **C08L 63/00 , C08G 59/50 , C08L 79/08 , C08L 61/32**

(30) Priority: **22.07.87 JP 182482/87**

(43) Date of publication of application: **25.01.89 Bulletin 89/04**

(84) Designated Contracting States: **DE FR GB**

(71) Applicant: **Matsushita Electric Industrial Co., Ltd.**
**1006, Oaza Kadoma**
**Kadoma-shi Osaka-fu, 571(JP)**

(72) Inventor: **Suetsugu, Kenichiro**
**21-12-203, Minamimukonoso-4-chome**
**Amagasaki-shi(JP)**

(74) Representative: **Kraus, Jürgen Helmut, Dipl.-Phys. et al**
**c/o Leinweber & Zimmermann Rosental 7**
**D-8000 München 2(DE)**

## (54) Rim material for exterior finish and method for producing same.

(57) This invention provides a RIM material for exterior finish which comprises a bisphenol A type epoxy resin, 5 - 70% by weight of an alicyclic modified amine, 5 - 20% by weight of a modified alicyclic polyamine, 5 - 30% by weight of a rubber component and 5 - 30% by weight of a polyimide and further provides an RIM material which comprises the above components in which are incorporated a fibrous or flaky filler having an average aspect ratio of 5 - 15 and a spherical filler having an average aspect ratio of 1 - 3 in an amount of 10 - 50% by weight. These materials can be cured at low temperatures, are well balanced in characteristics such as heat resistance and impact resistance, have novel performances which have never been previously seen and require a very short time for curing.

EP 0 300 484 A2

Xerox Copy Centre

# RIM MATERIAL FOR EXTERIOR FINISH AND METHOD FOR PRODUCING SAME

## BACKGROUND OF THE INVENTION

### FIELD OF THE INVENTION

This invention relates to an exterior finishing RIM (reaction injection molding) material used for multi-variety limited quantity production of resin molded articles and a method for production of molded articles using the material.

### DESCRIPTION OF THE PRIOR ART

Hitherto, urethane RIM materials, epoxy RIM materials and the like have been mainly used for multi-variety limited quantity production of resin molded articles. These materials, however, have the following problems, namely, (1) low heat resistance of 70-80° C for urethane RIM materials and (2) low impact characteristics (less than 10 kg-cm/cm in Izod impact strength with notched test piece) for epoxy RIM materials.

Thus, nylon RIM materials have been studied as substitutes for these materials. The nylon RIM materials have high flexural modulus (higher than 20000 [kg/cm$^2$]) and are well balanced between impact characteristics (Izod impact strength higher than 10 kg-cm/cm with notched test piece) and heat distortion temperature (higher than 120° C under a load of 18.6 kg). Besides, they are liquid and low in viscosity and do not require the mold to be of metal and so have been used for production of articles on experimental basis which is one kind of multi-variety limited quantity production. The nylon RIM materials for production of articles on experimental basis have been put to practical use and techniques applicable to multi-variety limited quantity production using the nylon RIM materials are now studied.

However, a polyamide group which is a component of nylon RIM materials has the property to absorb water, which causes adverse effects in its properties and dimensional changes to the products. At present, water, absorption is 2.0 wt. % (under atmospheric equilibrium) and dimensional change is 0.18%. For these reasons, nylon RIM materials are difficult to use as actual articles and development for commercialization has been delayed.

## SUMMARY OF THE INVENTION

Accordingly, the object of this invention is to provide epoxy RIM materials for exterior finishing which are satisfactory in impact characteristics and heat distortion characteristics and small in dimensional change due to absorption of water and a method for producing molded articles using the materials.

## DISCLOSURE OF THE INVENTION

This invention provides RIM materials which comprise a bisphenol A type epoxy resin, 5 - 70% by weight of an alicyclic modified amine represented by the following formula (I), 5 - 20% by weight of a modified alicyclic polyamine, 5 - 30% by weight of a rubber component represented by the following formula (II) and 5 - 30% by weight of a polyimide represented by the following formula (III)

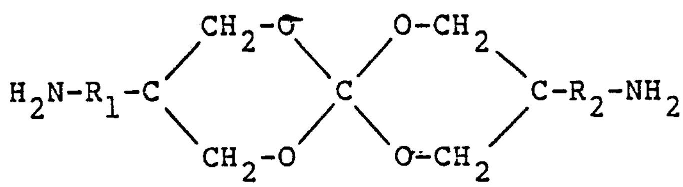

(I)

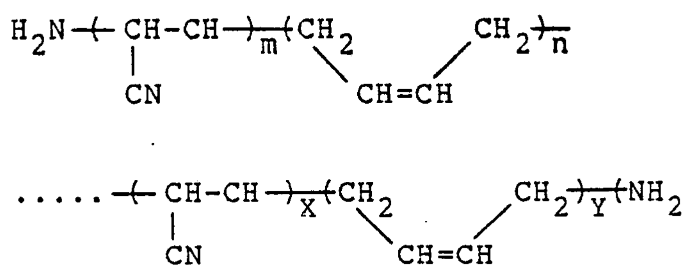

(II)

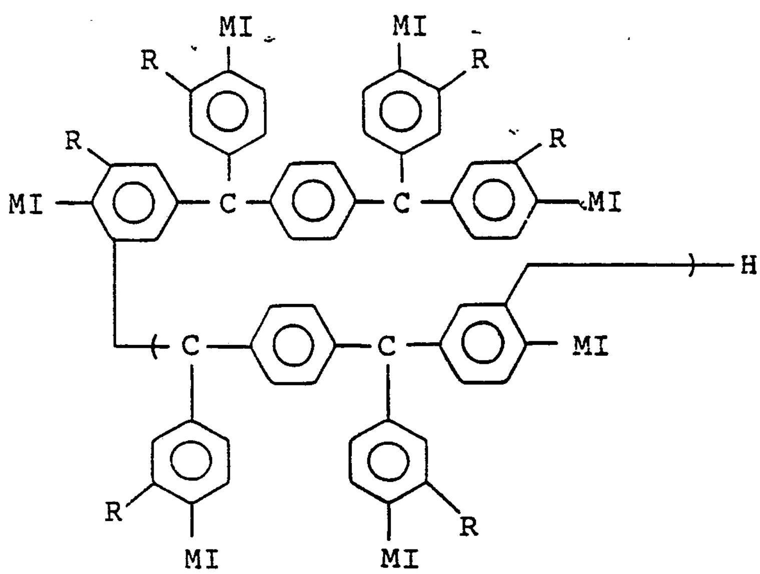

(III)

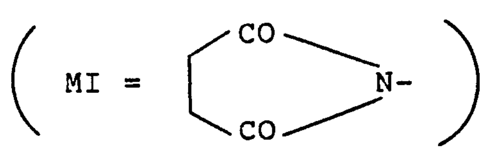

wherein $R_1$ and $R_2$ respectively represent $-(CH_2)_{2-8}-$ group; m, n, X, and Y respectively represent a natural number of 5 - 100; and R represents -OH, $-OCH_3$, $-CH_3$ or -COOH group.

This invention further provides RIM materials which comprises a bisphenol A type epoxy resin, 5 - 70% by weight of an alicyclic modified amine represented by the above formula (I), 5 - 20% by weight of a modified alicyclic polyamine, 5 - 30% by weight of a rubber component represented by the above formula (II) and 5 - 30% by weight of a polyimide represented by the above formula (III), in which are incorporated 10 - 50% by weight of a fibrous or flaky filler having an average aspect ratio of 5 - 15 and a spherical filler having an aspect ratio of 1 - 3.

This invention further provides a method for producing a molded article of an exterior finishing RIM material which comprises mixing in a mixing head liquid A comprising a bisphenol A type epoxy resin with component B comprising 5 - 70% by weight of an alicyclic modified amine represented by the above formula (I), 5 - 20% by weight of a modified alicyclic polyamine, 5 - 30% by weight of a rubber component represented by the above formula (II) and 5 - 30% by weight of a polyimide represented by the formula (III)

and injecting the mixture into a rubber mold or resin mold in a vacuum chamber to produce a molded article.

The bisphenol A type epoxy resin is a main component in this invention and has a function of retaining the mechanical strength of the material. The alicyclic modified amine has a function of improving impact resistance of the molding materials and the modified alicyclic polyamine has a function of improving heat resistance. The rubber component represented by the formula (II) has the functions of improving impact resistance of the molding materials and improving creep characteristics. The polyimide represented by the formula (III) has the functions of improving heat resistance and simultaneously reducing the viscosity of the mixed liquid which per se has a high viscosity. The filler having an average aspect ratio of 5 - 15 has a function of improving the mechanical strength of a material without causing increase in viscosity of the liquid material and the filler having an average aspect ratio of 1 - 3 functions to stabilize shrinkage of the material. The mixing head can mix liquid A and liquid B with forming a minimum amount of bubbles and the vacuum chamber eliminates any bubbles from the material while being injected and spontaneously applies an atmospheric pressure of 1 kg/cm$^2$ after being released to atmospheric pressure to increase dimensional accuracy.

## BRIEF DESCRIPTION OF THE DRAWINGS

Fig. 1 is an oblique view of a master model.

Fig. 2 is a schematic view of an apparatus used for molding of the epoxy RIM material composition, wherein 1, 2 and 9 are respectively tanks of liquids A and B and a washing liquid (caprolactum); 3 is a change valve; 4 is a static mixer; 5 is a shaped article; 6 is a rubber mold; 7 is a vacuum chamber and 8 is a suction hole.

## DESCRIPTION OF THE PREFERRED EMBODIMENTS

This invention will be explained in more detail by the following examples.

### Example 1

100 Grams of an epoxy resin (#828 supplied by Yuka Shell Co.) as liquid A and a mixed liquid, as liquid B, comprising 15, 30, 40 or 60 g of an alicyclic modified amine (X-3 supplied by Yuka Shell Co.), 20 g of a modified alicyclic polyamine (YL-006 supplied by Yuka Shell Co.), 10 g of CTBN monomer (supplied by Daito Sangyo Co.) and 20 g of a polyimide (MP-8000 supplied by Mitsubishi Yuka Co.) were cast into a mold to obtain test pieces.
Properties of the test pieces are shown in Table 1.

Table 1

| Amount of alicyclic amine | 15 (10 wt. %) | 30 (18 wt. %) | 40 (23 wt. %) | 60 (30 wt. %) |
|---|---|---|---|---|
| Impact strength [kg-cm/cm] | 14 | 22 | 29 | 31 |
| H.D.T. (°C) | 148 | 120 | 103 | 97 |

From the results in Table 1, it can be seen that the RIM materials provided molded articles superior in impact resistance and heat resistance. Even when a colorant (supplied by Dainichikasei Co.) was incorporated into these RIM materials, curing thereof was not inhibited and molded articles satisfactory in appearance were obtained therefrom.

When the amount of the alicyclic modified amine represented by the formula (I) was less than 5% by weight, impact strength was less than 10 and when more than 70% by weight, heat distortion temperature was lower than 90 °C. When amount of modified alicyclic polyamine was 5% by weight, curing time was longer than 15 minutes and when more than 20% by weight, impact strength was less than 10. Further, when the amount of the rubber component represented by the formula (II) was less than 5% by weight, the molded article lacked toughness and crack occurred by screw-tightening and when more than 30% by weight, heat distortion temperature was lower than 90 °C. When the amount of the polyimide represented by the formula (III) was less than 5% by weight, heat distortion temperature was lower than 90 °C and when more than 30% by weight, impact strength was less than 10 [kg-cm/cm].

Example 2

To the RIM materials formulated as in Example 1 (amount f the alicyclic amine: 18 wt. %), milled fibers having an average aspect ratio of 11 (F 104 supplied by Nitto Boseki Ci., Ltd.) in amounts of 50, 30, 20, 10 and 5% by weight and glass beads having an average ratio of 1 (30 μ or less in particle size, supplied by Toshiba Baroteany Corp.) in an amount of 10, 20, 30, 40 and 45% by weight were respectively correspondingly mixed. The resulting RIM materials were called $A_1$, $A_2$, $A_3$, $A_4$ and $A_5$ for convenience. These were cast in metallic molds to obtained test pieces.

Properties of them were measured in the same manner as in Example 1. The results are shown in the following Table 2.

Table 2

| | $A_1$ | $A_2$ | $A_3$ | $A_4$ | $A_5$ |
|---|---|---|---|---|---|
| Impact strength [kg-cm/cm] | 28 | 20 | 15 | 13 | 8.9 |
| Heat distortion temperature (°C) | 128 | 123 | 115 | 107 | 102 |

From these results, it can be seen that articles of superior properties were obtained. The reinforcement with the fillers resulted in articles of 0.2 - 0.5% in molding shrinkage while this was about 2 - 3% without the reinforcement.

Use of fillers of more than 15 in average aspect ratio caused extreme increase in viscosity due to their long fiber length and such materials were not suitable for molding. When average aspect ratio was less than 5, they did not serve as fillers and did not afford any reinforcing effect.

Example 3

Rubber mold 6 made from the master model M shown in Fig. 1 was left to stand in a thermostatic vessel 60 °C for 3 hours to warm it.

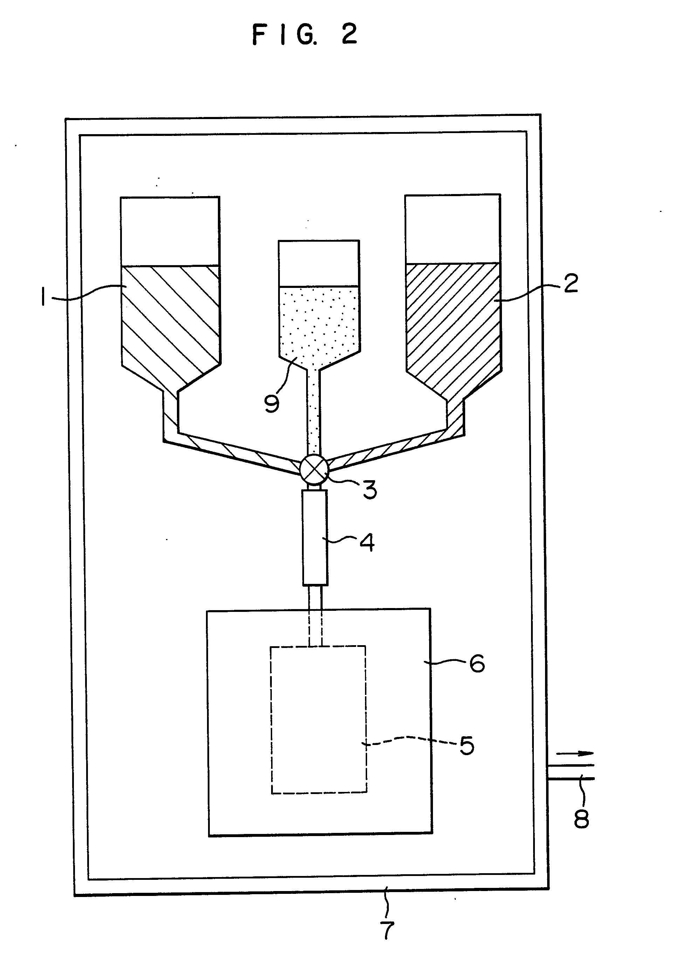

Liquid A and liquid B (alicyclic amine 18 wt. %) prepared in Example 1 were left to stand in a thermostatic vessel at 60 °C to warm them. Liquid A, liquid B and washing liquid (caprolactum) were poured into tank 1, tank 2 and tank 9 shown in Fig. 2, respectively and the tip of static mixer 4 which mixes the three liquids was connected to the gate opening of rubber mold 6 moistured at 50 °C. These were placed in vacuum chamber 7, which was then deaerated from vacuum port 8. After confirming that pressure in the vacuum chamber reached as low as-76 cmHg, mixing value 3 was opened to inject the mixed liquid into rubber mold 6. After completion of the injection, it was allowed to stand for about 5 minutes to return the pressure in the vacuum chamber to normal pressure and then, molded article 5 of RIM material which was a duplicate of the master model and molded in rubber mold 6 was taken out and the gate and flashes were removed. Then, the article was completed.

This molded article was allowed to stand at 23 °C and 50 RH for 200 hours and then, compared with a molded article obtained from a conventional nylon RIM material. The results are shown in Table 3.

Table 3

| | Conventional product (Dimensional change from the master) (%) | The present product (Dimensional change from the master) (%) |
|---|---|---|
| a* | 0.52 | 0.02 |
| b* | 0.69 | 0.04 |
| c* | 0.63 | 0.03 |

* a, b, c : See Fig. 1.

From the above results, it can be seen that according to the materials of this invention, there was obtained a molded article of less than 1/20 (in dimensional change) of that of the article obtained from the conventional nylon RIM material. Furthermore, the molded article according to this invention had less bubbles than the conventional article and was superior in appearance.

As explained above, this invention provides an RIM material for exterior finish which comprises a bisphenol A type epoxy resin, 5 - 70% by weight of an alicyclic modified amine, 5 - 20% by weight of a modified alicyclic polyamine, and 5 - 30% by weight of a rubber component and 5 - 30% by weight of a polyimide and further provides an RIM material which comprises the above components in which are incorporated a fibrous or flaky filler having an average aspect ratio of 5 - 15 and a spherical filler having an average aspect ratio of 1 - 3 in an amount of 10 - 50% by weight. These materials can be cured at low temperatures (80 °C), are well balanced in characteristics such as heat resistance and impact resistance, have novel performances which have never been seen previously and require only less than 30 minutes for curing which is less than 1/5 of the conventional materials. Moreover, molded articles obtained by mixing liquids A and B of the RIM material and injecting the mixture into a mold in a vacuum chamber are less than 1/20 of the conventional article in dimensional change from the master. The articles according to this invention further have less bubbles and are excellent in appearance.

## Claims

1. An RIM material for exterior finish which comprises a bisphenol A type epoxy resin, 5 - 70% by weight of an alicyclic modified amine represented by the following formula (I), 5 - 20% by weight of a modified alicyclic polyamine, 5 - 30% by weight of a rubber component represented by the following formula (II) and 5 - 30% by weight of a polyimide represented by the following formula (III):

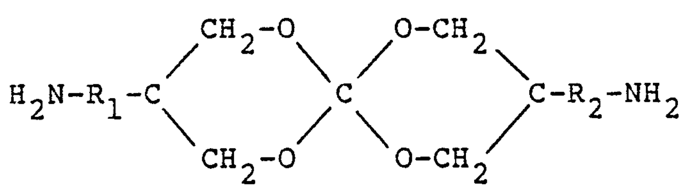

(I)

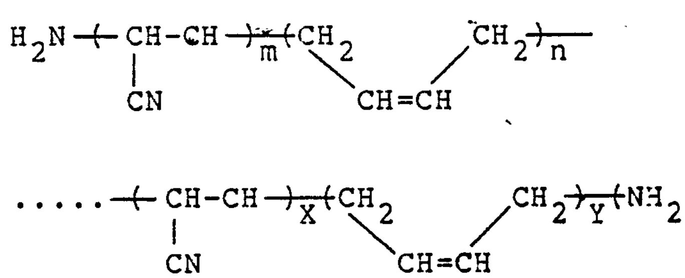

(II)

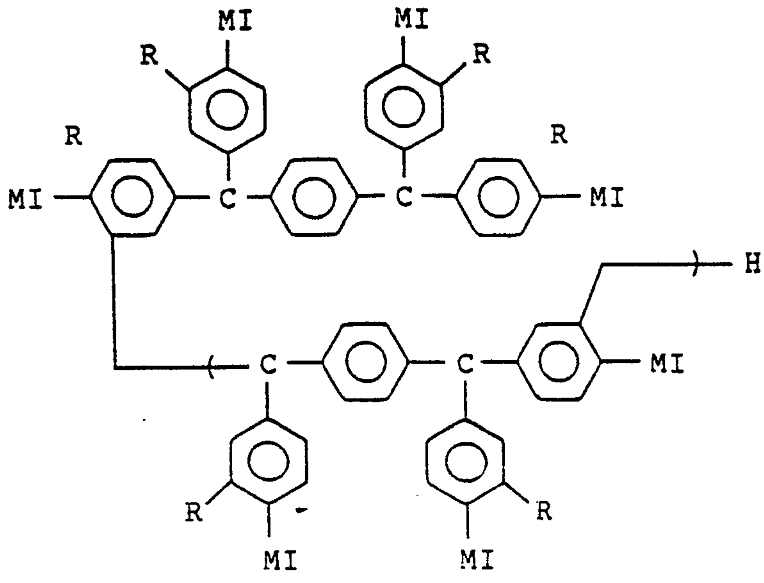

(III)

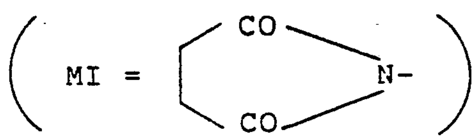

wherein $R_1$ and $R_2$ respectively represent $-(CH_2)_{2-8}-$ group; m, n, X, and Y respectively represent a natural number of 5 - 100; and R represents -OH, $-OCH_3$, $-CH_3$ or -COOH group.

2. An RIM material according to claim 1 in which are incorporated a fibrous or flaky filler having an average aspect ratio of 5 - 15 and a spherical filler having an average aspect ratio of 1 - 3 in an amount of 10 - 50% by weight.

3. A method for producing a molded article of an RIM material for exterior finish which comprises mixing in a mixing head a liquid A comprising a bisphenol A type epoxy resin and a liquid B comprising 5 - 70% by weight of an alicyclic modified amine represented by the following formula (I), 5 - 20% by weight of a modified alicyclic polyamine, 5 - 30% by weight of a rubber component represented by the following formula (II) and 5 - 30% by weight of a polyimide represented by the following formula (III) and injecting the mixture into a rubber mold or resin mold to mold the mixture:

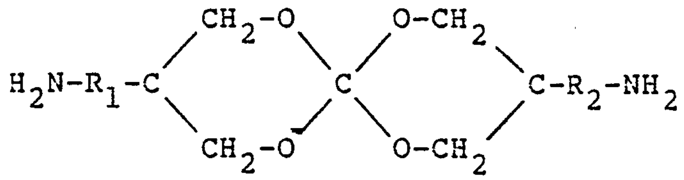

(I)

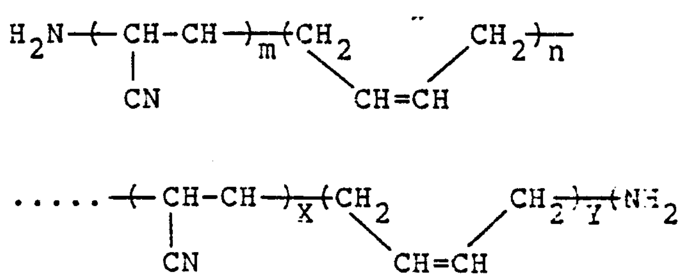

(II)

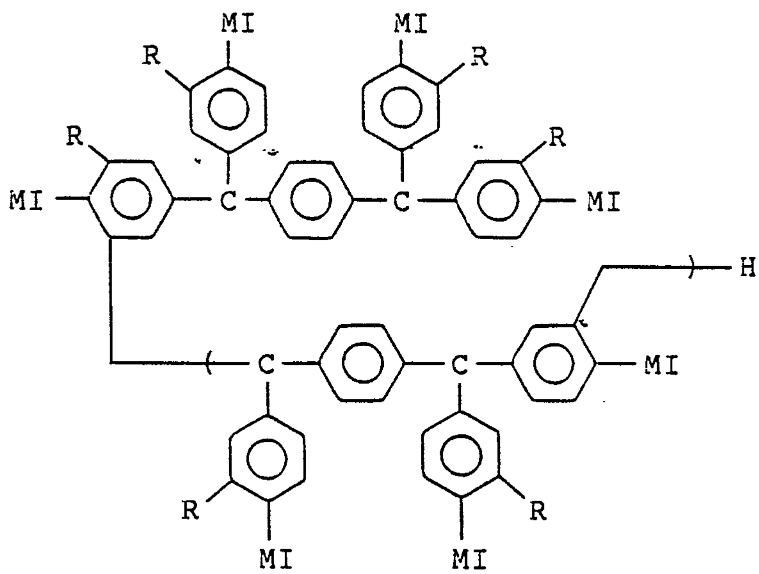

(III)

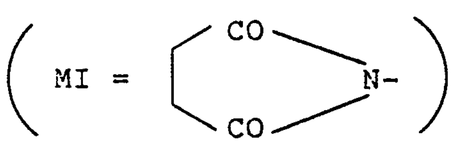

wherein $R_1$ and $R_2$ respectively represent $-(CH_2)_{2-8}-$ group; m, n, X, and Y respectively represent a natural number of 5 - 100; and R represents -OH, $-OCH_3$, $-CH_3$ or -COOH group.

4. A method according to claim 3 wherein a fibrous or flaky filler having an average aspect ratio of 5 - 15 and a spherical filler having an average aspect ratio of 1 - 3 are incorporated in the mixture in an amount of 10 - 50% by weight.

5. A molded article obtained by the method of claim 3.

6. A molded article obtained by the method of claim 4.

Neu eingereicht / Newly filed
Nouvellement déposé

FIG. 1

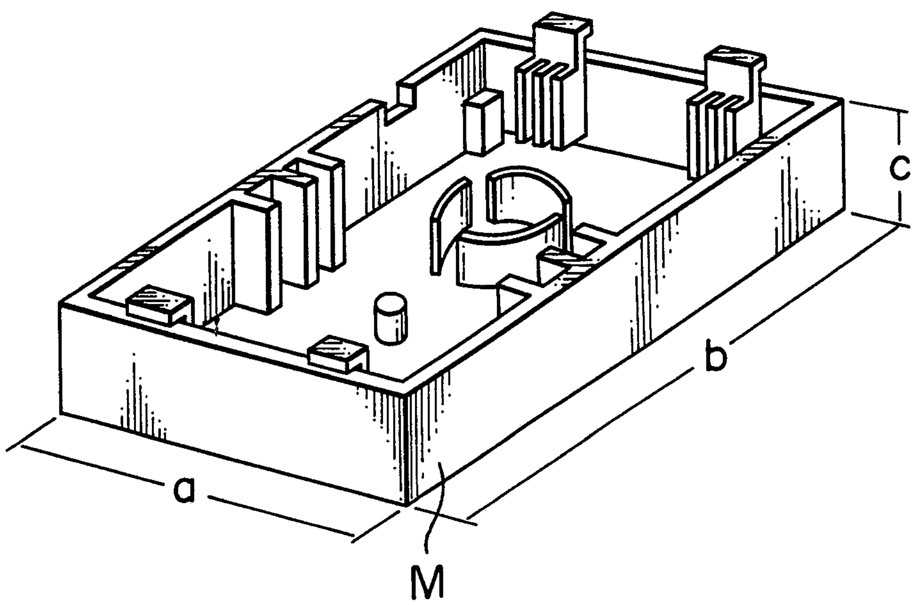

FIG. 2